(19) Europäisches Patentamt
European Patent Office
Office européen des brevets

(11) **EP 3 594 078 B1**

(12) **EUROPÄISCHE PATENTSCHRIFT**

(45) Veröffentlichungstag und Bekanntmachung des Hinweises auf die Patenterteilung:
**26.08.2020 Patentblatt 2020/35**

(51) Int Cl.:
***B60W 30/14*** *(2006.01)*     ***B60W 30/16*** *(2020.01)*
***G08G 1/16*** *(2006.01)*

(21) Anmeldenummer: **19181374.0**

(22) Anmeldetag: **19.06.2019**

(54) **VERFAHREN ZUM BETRIEB EINES FAHRERASSISTENZSYSTEMS EINES KRAFTFAHRZEUGS UND KRAFTFAHRZEUG**

METHOD FOR OPERATING A DRIVER ASSISTANCE SYSTEM OF A MOTOR VEHICLE AND MOTOR VEHICLE

PROCÉDÉ DE FONCTIONNEMENT D'UN SYSTÈME D'AIDE À LA CONDUITE D'UN VÉHICULE AUTOMOBILE ET VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2018 DE 102018211590**

(43) Veröffentlichungstag der Anmeldung:
**15.01.2020 Patentblatt 2020/03**

(73) Patentinhaber: **Audi AG**
**85045 Ingolstadt (DE)**

(72) Erfinder: **Stadler, Michael**
**85080 Gaimersheim (DE)**

(56) Entgegenhaltungen:
**DE-A1-102007 054 095**    **DE-A1-102010 010 557**
**DE-A1-102013 013 799**    **DE-A1-102013 214 308**
**DE-A1-102016 220 583**    **US-A1- 2016 272 204**

**Beschreibung**

Die Erfindung betrifft ein Verfahren zum Betrieb eines wenigstens zur automatischen Längsführung eines Kraftfahrzeugs ausgebildeten Fahrerassistenzsystems des Kraftfahrzeugs, insbesondere eines ACC-Systems, wobei das Kraftfahrzeug ferner eine vorausfahrende Verkehrsteilnehmer wenigstens teilweise auch auf benachbarten Fahrspuren erfassende Frontsensorik, insbesondere umfassend wenigstens einen Radarsensor und/oder wenigstens einen Laserscanner, aufweist, deren Sensordaten dem Fahrerassistenzsystem bereitgestellt werden. Daneben betrifft die Erfindung ein Kraftfahrzeug.

Längsführende Fahrerassistenzsysteme sind insbesondere in Form von automatischen Abstandsregelsystemen (ACC-Systemen) bereits bekannt und bei modernen Kraftfahrzeugen im Einsatz. Dabei werden vorausfahrende Kraftfahrzeuge im prädizierten Fahrschlauch des eigenen Kraftfahrzeugs detektiert, so dass die insbesondere fahrerseitig eingestellte Wunschgeschwindigkeit des Fahrerassistenzsystems reduziert werden kann, um einen Abstand zu dem vorausfahrenden Fahrzeug, insbesondere in Form einer Zeitlücke, zu halten. Das bedeutet, die Geschwindigkeit des eigenen Kraftfahrzeugs wird von der eingestellten Wunschgeschwindigkeit reduziert, falls die Geschwindigkeit des unmittelbar voranfahrenden Kraftfahrzeugs auf derselben Fahrspur zu einer Unterschreitung eines einzuhaltenden Mindestabstands, der der Sicherheit dient, führen würde. Um diese Funktion durchzuführen, nutzen bekannte längsführende Fahrerassistenzsysteme, insbesondere ACC-Systeme, meist Frontsensoriken, die wenigstens einen Radarsensor und/oder wenigstens einen Laserscanner umfassen können. Radarsensoren haben den Vorteil, nicht nur die relative Position, sondern auch Geschwindigkeiten erfassen zu können.

Ein wichtiges Thema bei Sicherheitsbetrachtungen von Kraftfahrzeugen ist noch immer der sogenannte "tote Winkel". Während bei größeren Kraftfahrzeugen wie Bussen oder Lastkraftwagen zusätzliche Spiegelanordnungen in vielen Legislaturen Pflicht sind, um den Bereich des "toten Winkels" zu minimieren, wurden auch bei Personenkraftwagen sogenannte "Totwinkel-Assistenzsysteme" vorgeschlagen, um bei bevorstehenden Spurwechseln den Fahrer des Kraftfahrzeugs vor Verkehrsteilnehmern im Bereich des toten Winkels zu warnen. Trotz all dieser Bemühungen treten jedoch noch immer Unfälle auf, welche darauf zurückzuführen sind, dass andere Verkehrsteilnehmer nicht gesehen wurden. Die bereits bekannten Hilfsmittel zur Erhöhung der Sicherheit bezüglich des toten Winkels zielen darauf ab, den nicht sichtbaren Bereich beim Autofahrer sichtbar oder zumindest bemerkbar zu machen, ohne dass jedoch Fahrsituationen mit Verkehrsteilnehmern im toten Winkel selbst vermieden werden.

DE 10 2004 029 369 B4 betrifft einen Spurwechselassistenten für Kraftfahrzeuge, bei dem eine Umfeldsensorik zur Erfassung des Verkehrsumfelds einschließlich des Verkehrs auf einer Nebenspur verwendet wird. Eine Erkennungseinrichtung ist dazu ausgebildet, anhand der Daten der Umfeldsensorik ein Fenster für ein gefahrloses Einscheren auf die Nebenspur zu erkennen, wobei zudem eine Beschleunigungsstrategie ermittelt wird. Ein Spurwechselsignal soll in der Form einer spürbaren Anfangsbeschleunigung an den Fahrer übermittelt werden. Dabei soll die Umfeldsensorik auch Fahrzeuge erkennen, die sich mit dem eigenen Fahrzeug auf annähernd gleicher Höhe befinden. Die Überwachung des Verkehrs auf der Nebenspur kann permanent oder nur bei erkanntem oder anzunehmendem Spurwechselwunsch des Fahrers erfolgen.

DE 10 2008 012 644 A1 betrifft einen Längsführungsassistenten mit einer Seitenassistenzfunktion für Kraftfahrzeuge, wobei zusätzlich zu einer Vorfeldsensorik eine Seitenraumsensorik zur Überwachung des Raumes auf mindestens einer Seite des eigenen Fahrzeugs und ein Seitenassistenzmodul verwendet werden, wobei letzteres dazu ausgebildet ist, die Sollgeschwindigkeit und/oder den Sollabstand in Abhängigkeit von Daten der Seitenraumsensorik zu modifizieren. Dort wird mithin ein ACC-System diskutiert, bei dem bestimmte unfallträchtige Fahrsituationen automatisch vermieden werden sollen. Insbesondere sollen Fahrsituationen vermieden oder abgekürzt werden, in denen von Fahrzeugen, die sich annähernd auf gleicher Höhe und neben dem eigenen Fahrzeug befinden, eine erhöhte Unfallgefahr ausgeht, insbesondere, weil sie sich im toten Winkel befinden. Insbesondere kann eine Vergrößerung oder Verkleinerung der Sollgeschwindigkeit und/oder eine Vergrößerung des Sollabstands des ACC-Systems angesetzt werden.

DE 10 2013 214 308 A1 zeigt ein Verfahren nach dem Oberbegriff des Anspruchs 1.

Ausgehend hiervon liegt der vorliegenden Erfindung die Aufgabe zugrunde, ein bezüglich der Sicherheit verbessertes Verfahren zum Betrieb eines längsführenden Fahrerassistenzsystems, insbesondere ACC-Systems, anzugeben.

Zur Lösung dieser Aufgabe ist bei einem Verfahren der eingangs genannten Art erfindungsgemäß vorgesehen, dass bei aktiver automatischer Längsführung und bei Detektion eines langsameren, vorausfahrenden Verkehrsteilnehmers auf einer der aktuellen Fahrspur des Kraftfahrzeugs benachbarten Fahrspur durch Auswertung der Sensordaten eine Überholzeitdauer unter Berücksichtigung wenigstens des aktuellen Geschwindigkeitsunterschiedes zwischen der im Rahmen der Längsregelung ohne Berücksichtigung des detektierten Verkehrsteilnehmers maximal zulässigen Geschwindigkeit des eigenen Kraftfahrzeugs und der gemessenen Geschwindigkeit des detektierten Verkehrsteilnehmers vorausberechnet wird, wobei bei Unterschreitung einer maximal zulässigen Überholzeit durch die Überholzeitdauer als Sicherheitsbedingung auf einen Vorgabeabstand zu dem detektierten Verkehrsteilnehmer längsgeregelt wird.

Dabei wird in besonders zweckmäßiger Ausgestaltung die Detektion eines langsameren, vorausfahrenden Verkehrsteilnehmers, insbesondere frühzeitig, ebenso durch Auswertung der Sensordaten der Frontsensorik erreicht. Es wurde erkannt, dass Frontsensoriken für ACC-Systeme, auch im einfachsten Fall mit einzelnen Radarsensoren und/oder Laserscannern, auch parallel fahrende Verkehrsteilnehmer auf benachbarten Fahrspuren erkennen, bislang aber für die Abstandsregelung nicht weiter beachten. Mithin kann es vorkommen, dass bei vergleichbaren Geschwindigkeiten der parallel fahrenden Verkehrsteilnehmer sich ein Verkehrsteilnehmer für eine erhebliche Zeit im toten Winkel des anderen Fahrzeugs aufhält. Dies erhöht die Auftretenswahrscheinlichkeit eines Unfalls bei einem plötzlichen Spurwechsel des weiter vorne befindlichen Verkehrsteilnehmers. Bislang war es zwar mit der Frontsensorik moderner längsführender Fahrerassistenzsysteme möglich, diese Verkehrsteilnehmer und somit die entsprechende Verkehrssituation frühzeitig zu erfassen, jedoch wurde hieraus keinerlei Aktion abgeleitet. Dem wird im Rahmen der vorliegenden Erfindung nun dadurch abgeholfen, dass die Sensordaten der Frontsensorik, insbesondere ohne eine zusätzliche Verwendung einer Seitensensorik, auch bezüglich parallel auf benachbarten Fahrspuren fahrender Verkehrsteilnehmer ausgewertet werden und bei Erfüllung wenigstens einer bestimmten Sicherheitsbedingung spezielle Aktionen durchgeführt werden, im konkreten Fall eine modifizierte Abstandsregelung auf einen auf einer benachbarten Fahrspur vorausfahrenden, detektierten Verkehrsteilnehmer.

Es wird also in den Sensordaten eine Klassifizierung durchgeführt, die es erlaubt, zwischen parallel, also auf benachbarten Fahrspuren fahrenden Verkehrsteilnehmern und den bisher bereits betrachteten Verkehrsteilnehmern im Fahrschlauch des eigenen Kraftfahrzeugs zu unterscheiden. Parallel fahrende Verkehrsteilnehmer, die eine geringere Geschwindigkeit als das eigene Kraftfahrzeug aufweisen, werden nun näher betrachtet, da diese in näherer Zukunft überholt werden würden.

Dabei sei an dieser Stelle noch darauf hingewiesen, dass, bevor eine Längsregelung auf einen Vorgabeabstand zu dem parallel fahrenden, detektierten Verkehrsteilnehmer stattfindet, die maximal zulässige Geschwindigkeit des Fahrerassistenzsystems ohnehin als aktuelle Geschwindigkeit genutzt wird, so dass bei Verwendung eines Radarsensors in der Frontsensorik dieser den Unterschied als Relativgeschwindigkeit unmittelbar liefert. Eine Abweichung von der maximal zulässigen Geschwindigkeit des eigenen Kraftfahrzeugs ohne Berücksichtigung des detektierten Verkehrsteilnehmers kann allerdings dann auftreten, wenn bereits eine Längsregelung auf den detektierten Verkehrsteilnehmer erfolgt, was im Folgenden noch genauer dargelegt werden wird.

Für einen langsameren, vorausfahrenden Verkehrsteilnehmer auf einer der aktuellen Fahrspur des Kraftfahrzeugs benachbarten Fahrspur wird im Rahmen der vorliegenden Erfindung nun vorausberechnet, wie lange ein Überholvorgang in der aktuellen Konstellation voraussichtlich andauern wird. Wird hierfür eine zu lange Zeit, also eine die maximal zulässige Überholzeit überschreitende Überholzeitdauer, ermittelt, bedeutet dies aber auch, dass sich das eigene Kraftfahrzeug für eine lange Zeit innerhalb des toten Winkels des anderen Kraftfahrzeugs befinden würde, was unerwünscht ist, da eine unfallträchtige Situation besteht. Daher wird vorgeschlagen, bis zu einer Änderung der vorliegenden Bedingungen auf den versetzt fahrenden, detektierten Verkehrsteilnehmer geregelt wird, wobei der Vorgabeabstand dem Sollabstand zu einem auf derselben Fahrspur vorausfahrenden Regelobjekt entsprechen kann, jedoch aufgrund des versetzten Fahrens auch deutlich geringer gewählt werden kann, beispielsweise als ein hinterer Sicherheitsabstand des detektierten Verkehrsteilnehmers, der von der Geschwindigkeit abhängig gewählt werden kann. Mithin trägt die vorliegende Erfindung durch Auswahl eines bislang nicht beachteten Regelobjekts in bestimmten Fahrsituationen dazu bei, gefährliche Konstellationen, wie langes Fahren im toten Winkel eines anderen Verkehrsteilnehmers, zu vermeiden und somit die Sicherheit innerhalb des Kraftfahrzeugs zu erhöhen. Dabei wird besonders bevorzugt mittels der Frontsensorik eine bereits vorliegende Sensorik des Kraftfahrzeugs ohne eine notwendige Erweiterung genutzt, wobei gleichzeitig der Funktionsumfang des Fahrerassistenzsystems vergrößert ist.

Eine zweckmäßige Weiterbildung der Erfindung sieht vor, dass die Längsregelung auf den detektierten Verkehrsteilnehmer abgebrochen wird, wenn der Geschwindigkeitsunterschied eine höhere Geschwindigkeit des detektierten Verkehrsteilnehmers als die maximal zulässige Geschwindigkeit des eigenen Kraftfahrzeugs (wiederum ohne Berücksichtigung des detektierten Verkehrsteilnehmers) anzeigt. Analog kann, wie noch genauer erläutert werden wird, ein Abbruch dieser Folgeregelung auch dann erfolgen, wenn ein sicheres, insbesondere kürzer als die maximal zulässige Überholzeit andauerndes Überholen ermöglicht wird.

Die maximal zulässige Überholzeit kann beispielsweise im Bereich von 5 Sekunden bis 15 Sekunden gewählt werden. Je mehr sich in der konkreten Ermittlung der Überholzeitdauer diese auf den Aufenthalt im toten Winkel bezieht, desto kürzer kann die maximal zulässige Überholzeit letztlich auch gewählt werden. Es hat sich gezeigt, dass der Bezug auf einen größeren Bereich, der eine bestimmte Sicherheitskritikalität wiedergibt, eine zweckmäßigere Berechnung erlaubt, so dass diesbezüglich auch längere maximal zulässige Überholzeiten gewählt werden können.

Konkret kann vorgesehen sein, dass für die Ermittlung der Überholzeitdauer eine Überholstrecke ermittelt und durch die Geschwindigkeitsdifferenz geteilt wird. Dabei ist es besonders bevorzugt, wenn die Überholstrecke wenigstens einen vorderen und einen hinteren Sicherheitsabstand des detektierten Verkehrsteilnehmers und/oder die Summe der Längen des eigenen Kraftfahrzeugs und des detektierten Verkehrsteilnehmers umfassend ermittelt wird. Der entsprechende Sicherheitsabstand kann insbesondere in Abhängigkeit von der Geschwindigkeit des eigenen Kraftfahrzeugs und/oder des detektierten Verkehrsteilnehmers gewählt werden, wobei hierbei nicht zwangsläufig der gängige "halbe Tacho" herangezogen werden muss, sondern selbstverständlich auch aufgrund des versetzten Fahrens deutlich kürzere Sicherheitsabstände herangezogen werden können, die letztlich für die Sicherheit bei plötzlich stattfindenden Spurwechselmanövern besonders relevant sind. Zusammenfassend kann eine nützliche Überholzeitdauer mithin äußerst einfach abgeschätzt werden, indem der Geschwindigkeitsunterschied, mithin die Geschwindigkeitsdifferenz, und eine Überholstrecke ermittelt und miteinander verknüpft werden, wobei sich die Überholstrecke konkret als die Summe der Längen des eigenen Kraftfahrzeugs und des detektierten Verkehrsteilnehmers sowie der vorderen und hinteren Sicherheitsabstände des detektierten Verkehrsteilnehmers ergeben kann. Überschreitet diese Überholzeitdauer die maximal zulässige Überholzeit, wird der auf der parallelen Fahrspur fahrende detektierte Verkehrsteilnehmer für die Abstandsregelung des ACC-Systems verwendet und auf den Vorgabeabstand geregelt. Der Vorgabeabstand kann beispielsweise als der hintere Sicherheitsabstand des detektierten Verkehrsteilnehmers, jedoch auch größer, gewählt werden.

Während des Überholvorgangs kann es zu einer Geschwindigkeitsänderung des detektierten Verkehrsteilnehmers bzw. zu einer Änderung der maximal zulässigen Geschwindigkeit ohne Berücksichtigung des detektierten Verkehrsteilnehmers im eigenen Kraftfahrzeug kommen. Dies kann bei stattfindendem Überholvorgang zu einer größeren Überholzeitdauer führen, bei bereits vorliegender Folgeregelung auf den detektierten Verkehrsteilnehmer aber zu einer erneuten Möglichkeit eines zulässigen Überholvorgangs, so dass zweckmäßigerweise eine kontinuierliche Aktualisierung der Überholzeitdauer erfolgt.

So sieht eine bevorzugte Ausgestaltung der vorliegenden Erfindung vor, dass, insbesondere zumindest außerhalb einer Nutzung der Überholstrecke bei einem Überholvorgang, die Überholzeitdauer anhand der aktuellen Sensordaten aktualisiert wird, wobei bei Nichterfüllung der Sicherheitsbedingung während einer Längsregelung auf den detektierten Verkehrsteilnehmer diese abgebrochen und ein Überholvorgang eingeleitet wird, oder bei Erfüllung der Sicherheitsbedingung während eines Überholvorgangs der Überholvorgang abgebrochen und auf den Vorgabeabstand zu dem detektierten Verkehrsteilnehmer längsgeregelt wird. Das bedeutet, wenn beispielsweise während eines laufenden Überholvorgangs festgestellt wird, dass die Überholzeitdauer die maximal zulässige Überholzeit überschreitet, kann der Überholvorgang aus Sicherheitsgründen abgebrochen werden, die Geschwindigkeit des eigenen Kraftfahrzeugs reduziert werden und in den Folgebetrieb bezüglich des detektierten Verkehrsteilnehmers übergegangen werden. Dabei ist es besonders zweckmäßig, wenn der Fortschritt des Überholvorgangs mit berücksichtigt wird, da es beispielsweise weniger sinnvoll ist, den Überholvorgang noch abzubrechen, wenn der andere Verkehrsteilnehmer im Prinzip bereits überholt ist, beispielsweise sich das eigene Kraftfahrzeug im vorderen Sicherheitsabstand des detektierten Verkehrsteilnehmers befindet. Wird dies festgestellt, ist es auch denkbar, das eigene Kraftfahrzeug etwas zu beschleunigen, um den Überholvorgang noch abzuschließen. Beispielsweise kann vorgesehen sein, dass ein Abbruch eines Überholvorgangs nicht mehr erfolgt, wenn 50 % der oben beschriebenen Überholstrecke zurückgelegt wurden oder das eigene Kraftfahrzeug den durch den vorderen Sicherheitsabstand beschriebenen Anteil der Überholstrecke erreicht hat.

Allerdings kann auch, wenn der bereits als Regelobjekt dienende detektierte Verkehrsteilnehmer seine Geschwindigkeit reduziert, festgestellt werden, dass nun mit der ansonsten maximal zulässigen Geschwindigkeit des längsführenden Fahrerassistenzsystems ein hinreichend schneller Überholvorgang stattfinden kann, so dass die Folgeregelung abgebrochen werden kann und der Überholvorgang vorgenommen wird.

Eine Entscheidung über den Abbruch eines Überholvorgangs anhand einer Überholstrecke bzw. einer Position entlang der Überholstrecke kann insbesondere dann zweckmäßig sein, wenn weitere Sensorik des Kraftfahrzeugs existiert, die eine Nachverfolgung des detektierten Verkehrsteilnehmers auch dann ermöglicht, wenn die Frontsensorik bzw. eine gegebenenfalls vorgesehene Hecksensorik diesen nicht mehr erfasst bzw. wenn eine hinreichend genaue Abschätzung der weiteren Position des detektierten Verkehrsteilnehmers möglich ist. Jedoch sind auch, insbesondere zusätzlich einsetzbare, weitere Kriterien betrachtbar, um Überholvorgänge gegebenenfalls aus Sicherheitsgründen abzubrechen, ohne dass eine detektierte Seitensensorik oder eine hochverlässliche Abschätzungseinheit existiert.

Zunächst ist es zweckmäßig, dann, wenn nach einem Verschwinden aus dem Erfassungsbereich der Frontsensorik aufgrund eines Überholvorgangs der detektierte Verkehrsteilnehmer wieder im Erfassungsbereich der Frontsensorik auftaucht, der Überholvorgang als abgebrochen bewertet wird, nachdem es ja ersichtlich nicht gelungen ist, den anderen Verkehrsteilnehmer zu überholen. Zusätzlich oder alternativ kann das Kraftfahrzeug auch eine Hecksensorik, insbesondere umfassend wiederum einen Radarsensor und/oder einen Laserscanner, aufweisen, wobei bei Auftauchen des detektierten Verkehrsteilnehmers in dem Erfassungsbereich der Hecksensorik der Überholvorgang als beendet bewertet werden kann.

In einer Zusammenschau dieser beiden Kriterien kann also eine Dauer des Überholvorgangs während desselben überwacht werden. So sieht eine zweckmäßige Weiterbildung der vorliegenden Erfindung vor, dass eine Überholzeitspanne, in der der detektierte Verkehrsteilnehmer weder in dem Erfassungsbereich der Frontsensorik noch in dem Erfassungsbereich der Hecksensorik auftaucht, gemessen wird, wobei bei Überschreitung eines Schwellwertes für die Überholzeitspanne der Überholvorgang durch Reduzierung der Geschwindigkeit des eigenen Kraftfahrzeugs abgebrochen wird. Hat das eigene Kraftfahrzeug mithin auch eine Hecksensorik, beispielsweise einen Heckradar, so kann der Überholvorgang als abgeschlossen betrachtet werden, wenn der detektierte Verkehrsteilnehmer mit der Hecksensorik erfasst werden kann. Taucht der detektierte Verkehrsteilnehmer jedoch nicht im Erfassungsbereich der Hecksensorik auf, so kann der Überholvorgang bei Überschreitung eines Schwellwerts durch die Überholzeitspanne abgebrochen werden, indem die Geschwindigkeit des eigenen Kraftfahrzeugs entsprechend verringert wird. Dabei kann der Schwellwert gleich der maximal zulässigen Überholzeit gewählt werden. Dabei sei darauf hingewiesen, dass nicht zwangsläufig ein Radarsensor oder Laserscanner bzw. nur ein Radarsensor oder Laserscanner als Hecksensorik herangezogen werden muss, sondern auch beispielsweise eine Rückfahrkamera als Teil der Hecksensorik verwendet werden kann, welche mit den entsprechenden Algorithmen den detektierten Verkehrsteilnehmer identifizieren kann und somit den Überholvorgang als abgeschlossen erkennen kann.

Dabei sei an dieser Stelle darauf hingewiesen, dass auch weitere Sensoren zur Umgebungserfassung des Kraftfahrzeugs, beispielsweise Ultraschallsensoren, Laserscanner, Lidar-Sensoren, Kameras und dergleichen, herangezogen werden können, um zu ermöglichen, den detektierten Verkehrsteilnehmer zu identifizieren und die Position des detektierten Verkehrsteilnehmers durchgängig zu erfassen, wobei übliche Verfahren der Sensorfusion (Sensordatenfusion) eingesetzt werden können. Insbesondere sind die Möglichkeiten zur Überwachung der Umgebung des Kraftfahrzeugs im Allgemeinen erheblich höher, falls das Kraftfahrzeug HAF-Funktionen anbietet, da dann üblicherweise weit mehr Sensoren an dem Kraftfahrzeug vorgesehen sind.

Dabei sei an dieser Stelle noch darauf hingewiesen, dass sich das hier beschriebene Vorgehen mit besonderem Vorteil auch bei einem vollständig automatischen Betrieb des Kraftfahrzeugs, also in Fahrzuständen des autonomen Fahrens, anwenden lässt.

Lässt sich der detektierte Verkehrsteilnehmer aufgrund einer Sensorfusion kontinuierlich nachverfolgen, sieht eine Alternative zur bereits beschriebenen Ausgestaltung ohne Seitensensorik vor, dass eine Überholzeitspanne, insbesondere betreffend die Überholstrecke, gemessen wird, wobei bei Überschreitung eines Schwellwerts für die Überholzeitspanne der Überholvorgang durch Reduzierung der Geschwindigkeit des eigenen Kraftfahrzeugs abgebrochen wird. In einem solchen Fall kann also die Überholzeitspanne direkter vermessen werden und insbesondere auch ermittelt werden, wo entlang der Überholstrecke sich das Kraftfahrzeug gerade befindet.

Neben dem Verfahren betrifft die vorliegende Erfindung auch ein Kraftfahrzeug, aufweisend ein wenigstens zur automatischen Längsführung des Kraftfahrzeugs ausgebildetes Fahrerassistenzsystem mit einem zur Durchführung des erfindungsgemäßen Verfahrens ausgebildeten Steuergerät. Das Kraftfahrzeug umfasst dabei auch die dem Fahrerassistenzsystem zugeordnete Frontsensorik. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:

Fig. 1 eine Verkehrssituation mit einem erfindungsgemäßen Kraftfahrzeug zur Erläuterung des erfindungsgemäßen Verfahrens,

Fig. 2 einen Ablaufplan eines ersten Anteils eines Ausführungsbeispiels des erfindungsgemäßen Verfahrens, und

Fig. 3 einen Ablaufplan eines zweiten Anteils eines Ausführungsbeispiels des erfindungsgemäßen Verfahrens.

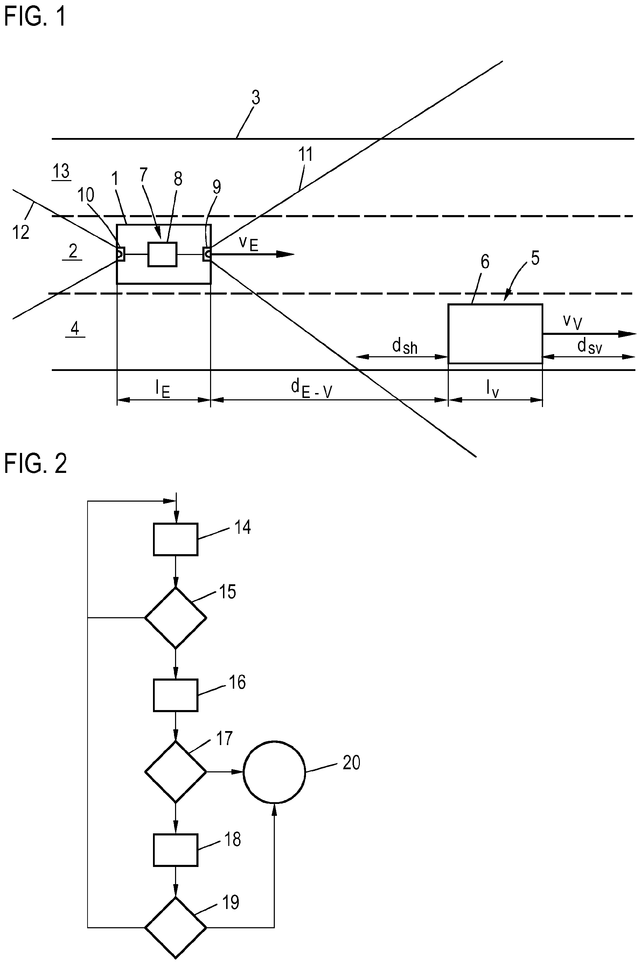

Fig. 1 zeigt ein erfindungsgemäßes Kraftfahrzeug 1 bei der Fahrt auf der mittleren Fahrspur 2 einer vorliegend dreispurigen Fahrbahn 3, wobei sich auf der rechten Spur 4 ein weiterer Verkehrsteilnehmer 4, vorliegend ein Fahrzeug 6, befindet. Das erfindungsgemäße Kraftfahrzeug 1 umfasst ein wenigstens zur automatischen Längsführung des Kraftfahrzeugs 1 ausgebildetes Fahrerassistenzsystem 7 mit einem Steuergerät 8, das zur Durchführung des erfindungsgemäßen Verfahrens ausgebildet ist. Hierzu nutzt das Steuergerät 8 insbesondere Sensordaten einer Frontsensorik 9, die vorliegend wenigstens einen Radarsensor umfasst, und Sensordaten einer Hecksensorik 10, die ebenso wenigstens einen Radarsensor umfasst. Eine Seitensensorik ist im hier dargestellten Ausführungsbeispiel nicht vorgesehen.

Wie die in Fig. 1 ebenso angedeuteten Erfassungsbereiche 11, 12 der entsprechenden Sensoriken 9, 10 anzeigen, werden auch Verkehrsteilnehmer auf der eigenen Fahrspur 2 benachbarten Fahrspuren 4, 13 grundsätzlich detektiert, so dass deren relative Positionen und Geschwindigkeiten in den Sensordaten enthalten sind. Vorliegend gilt dies insbesondere für den durch das Kraftfahrzeug 1 detektierten, versetzt parallel vorausfahrenden Verkehrsteilnehmer 5. Hier setzt das erfindungsgemäße Verfahren an, von dem ein erster Anteil in Fig. 2 näher dargestellt ist. Dabei deutet der Schritt 14 die soeben beschriebene Detektion des Verkehrsteilnehmers 5 an.

In einem Schritt 15 wird überprüft, ob der detektierte, auf einer benachbarten Fahrspur 4 vorausfahrende Verkehrsteilnehmer 5 langsamer als das eigene Kraftfahrzeug 1 ist. Ist dies nicht der Fall, wird der üblichen Überwachung des Umfelds und dem üblichen Betrieb des Fahrerassistenzsystems 7 fortgefahren. Vorliegend ist jedoch ein Fall gegeben, in dem die Geschwindigkeit $v_V$ des detektierten Verkehrsteilnehmers 5, vgl. Fig. 1, kleiner als die Geschwindigkeit $v_E$ des eigenen Kraftfahrzeugs 1 ist.

In diesem Fall wird in einem Schritt 16 eine Überholzeitdauer anhand des aktuellen Geschwindigkeitsunterschieds

$$\Delta v = v_E - v_V$$

vorausberechnet. Hierfür wird eine Überholstrecke

$$d_{überhol} = l_E + l_V + d_{sh} + d_{sv}$$

ermittelt, wobei $l_E$ und $l_V$ die Längen des Kraftfahrzeugs 1 bzw. des detektierten Verkehrsteilnehmers 5 und $d_{sh}$ und $d_{sv}$ Sicherheitsabstände vor und hinter dem detektierten Verkehrsteilnehmer 5 sind, vgl. hierzu Fig. 1. Entsprechend ergibt sich die Überholzeitdauer zu

$$t_{überhol} = d_{überhol}/\Delta v.$$

Für diese im Schritt 16 bestimmte Überholzeitdauer $t_{überhol}$ wird in einem Schritt 17 überprüft, ob sie eine maximal zulässige Überholzeit überschreitet. Ist dies der Fall, so wird in einem Schritt 18 der detektierte Verkehrsteilnehmer 5 als Regelobjekt verwendet und der Abstand wird auf einen Vorgabeabstand geregelt, der vorliegend beispielsweise dem hinteren Sicherheitsabstand $d_{sh}$ entsprechen kann. Damit wird verhindert, dass zu lange eine kritisehe Verkehrssituation, insbesondere ein zu langer Aufenthalt des Kraftfahrzeugs 1 im toten Winkel des Fahrzeugs 6, auftritt.

Diese Abstandsregelung auf den detektierten Verkehrsteilnehmer 5 wird solange aufrechterhalten, bis entweder dieser beginnt, schneller als das eigene Kraftfahrzeug 1 zu fahren, so dass wieder zur üblichen Längsführung des Fahrerassistenzsystems 1 zurückgekehrt werden kann. Wird der detektierte Verkehrsteilnehmer 5 jedoch so langsam, dass die (ständig aktualisierte) Überholzeitdauer $t_{überhol}$ unter Berücksichtigung der ohne die Regelung auf den detektierten Verkehrsteilnehmer 5 möglichen Geschwindigkeiten der Längsregelung die maximal zulässige Überholzeit wieder unterschreitet, kann, wie auch im Fall, dass dies bei der Überprüfung im Schritt 17 bereits der Fall war, ein Überholvorgang eingeleitet werden, vgl. den angedeuteten Schritt 20.

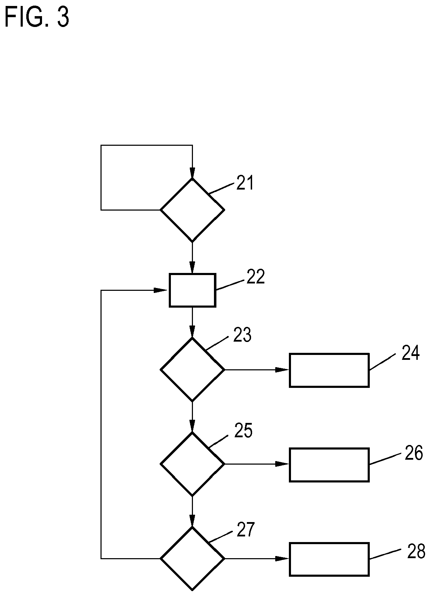

Eine Möglichkeit zur Überwachung dieses Überholvorgangs des Schrittes 20 bei dem Kraftfahrzeug 1 wird mithilfe von Fig. 3 näher erläutert. Dabei wird in einem Schritt 21 zunächst überwacht, ob der Verkehrsteilnehmer 5 aus dem Erfassungsbereich 11 der Frontsensorik 9 verschwindet. Ist dies der Fall, wird dies als zeitlicher Beginn des Überholvorgangs angesehen. Ab dann wird in einem Schritt 22 die bislang verstrichene Überholzeitspanne gemessen. Dabei wird zum einen in einem Schritt 23 überwacht, ob der detektierte Verkehrsteilnehmer 5 wieder im Erfassungsbereich 11 der Frontsensorik 9 auftaucht, woraufhin der Überholvorgang in einem Schritt 24 als abgebrochen bewertet wird. Ferner wird in einem Schritt 25 überwacht, ob der detektierte Verkehrsteilnehmer 5 in dem Erfassungsbereich 12 der Hecksensorik 10 erscheint . Ist dies der Fall, wird in einem Schritt 26 der Überholvorgang als erfolgreich beendet bewertet.

Danach wird in einem Schritt 27 überwacht, ob die bislang gemessene Überholzeitspanne kürzer als ein Schwellwert ist, der der maximal zulässigen Überholzeit entsprechen kann. Ist dies der Fall, wird entsprechend weiter gemessen, Schritt 22. Wird der Schwellwert jedoch überschritten, so wird in einem Schritt 28 der Überholvorgang durch Verringerung der Geschwindigkeit $v_E$ des eigenen Kraftfahrzeugs 1 abgebrochen.

In bevorzugten Weiterbildungen kann das Vorgehen der Fig. 3 noch verfeinert werden, indem beispielsweise die Position des detektierten Verkehrsteilnehmers 5 auch dann weiter abgeschätzt wird, wenn er nicht in den Erfassungsbereichen 11 und 12 enthalten ist, wobei ab einer bestimmten Relativposition, beispielsweise ab Eintreten des Kraftfahrzeugs 1 in den vorderen Sicherheitsabstand $d_{sv}$, der Schritt 27 nicht mehr durchgeführt wird, um nicht einen zu späten Abbruch des Überholvorgangs zu erzwingen. Weist das Kraftfahrzeug weitere Sensoren auf, die eine ständige Nachverfolgung des weiteren Verkehrsteilnehmers 5 erlauben, ist eine entsprechend genauere Positionsbestimmung bei Sensordatenfusion möglich, die dann selbstverständlich auch genutzt werden kann.

**Patentansprüche**

1. Verfahren zum Betrieb eines wenigstens zur automatischen Längsführung eines Kraftfahrzeugs (1) ausgebildeten Fahrerassistenzsystems (7) des Kraftfahrzeugs (1), insbesondere eines ACC-Systems, wobei das Kraftfahrzeug (1) ferner eine vorausfahrende Verkehrsteilnehmer (5) wenigstens teilweise auch auf benachbarten Fahrspuren (4, 13) erfassende Frontsensorik (9), insbesondere umfassend wenigstens einen Radarsensor und/oder wenigstens einen Laserscanner, aufweist, deren Sensordaten dem Fahrerassistenzsystem (7) bereitgestellt werden, **dadurch gekennzeichnet,**

**dass** bei aktiver automatischer Längsführung und bei Detektion eines langsameren, vorausfahrenden Verkehrsteilnehmers (5) auf einer der aktuellen Fahrspur (2) des Kraftfahrzeugs (1) benachbarten Fahrspur (4, 13) durch Auswertung der Sensordaten eine Überholzeitdauer unter Berücksichtigung wenigstens des aktuellen Geschwindigkeitsunterschiedes zwischen der im Rahmen der Längsregelung ohne Berücksichtigung des detektierten Verkehrsteilnehmers (5) maximal zulässigen Geschwindigkeit des eigenen Kraftfahrzeugs (1) und der gemessenen Geschwindigkeit des detektierten Verkehrsteilnehmers (5) vorausberechnet wird, wobei bei Überschreitung einer maximal zulässigen Überholzeit durch die Überholzeitdauer als Sicherheitsbedingung auf einen Vorgabeabstand zu dem detektierten Verkehrsteilnehmer (5) längsgeregelt wird.

2. Verfahren nach Anspruch 1,
   **dadurch gekennzeichnet,**
   **dass** die maximal zulässige Überholzeit im Bereich von 5 Sekunden bis 15 Sekunden gewählt wird.

3. Verfahren nach Anspruch 1,
   **dadurch gekennzeichnet,**
   **dass** für die Ermittlung der Überholzeitdauer eine Überholstrecke ermittelt und durch den Geschwindigkeitsunterschied geteilt wird.

4. Verfahren nach Anspruch 3,
   **dadurch gekennzeichnet,**
   **dass** die Überholstrecke wenigstens einen vorderen und einen hinteren Sicherheitsabstand des detektierten Verkehrsteilnehmers (5) und/oder die Summe der Längen des eigenen Kraftfahrzeugs (1) und des detektierten Verkehrsteilnehmers (5) umfassend ermittelt wird.

5. Verfahren nach einem der vorangehenden Ansprüche,
   **dadurch gekennzeichnet,**
   **dass**, insbesondere zumindest außerhalb einer Nutzung der Überholstrecke bei einem Überholvorgang, die Überholzeitdauer anhand der aktuellen Sensordaten aktualisiert wird, wobei bei Nichterfüllung der Sicherheitsbedingung während einer Längsregelung auf den detektierten Verkehrsteilnehmer (5) diese abgebrochen und ein Überholvorgang eingeleitet wird oder bei Erfüllung der Sicherheitsbedingung während eines Überholvorgangs der Überholvorgangs abgebrochen und auf den Vorgabeabstand zu dem detektierten Verkehrsteilnehmer (5) längsgeregelt wird.

6. Verfahren nach einem der vorangehenden Ansprüche,

**dadurch gekennzeichnet,**

**dass** bei einem nach einem Verschwinden aus dem Erfassungsbereich (11) der Frontsensorik (9) aufgrund eines Überholvorgangs darin wieder auftauchenden detektierten Verkehrsteilnehmer (5) der Überholvorgang als abgebrochen bewertet wird.

7. Verfahren nach einem der vorangehenden Ansprüche,
   **dadurch gekennzeichnet,**
   **dass** das Kraftfahrzeug (1) auch eine Hecksensorik (10) aufweist, wobei bei Auftauchen des detektierten Verkehrsteilnehmers (5) in dem Erfassungsbereich (12) der Hecksensorik (10) der Überholvorgang als beendet bewertet wird.

8. Verfahren nach Anspruch 6 und 7,
   **dadurch gekennzeichnet,**
   **dass** eine Überholzeitspanne, in der der detektierte Verkehrsteilnehmer (5) weder in dem Erfassungsbereich (11) der Frontsensorik (9) noch dem Erfassungsbereich (12) der Hecksensorik (10) auftaucht, gemessen wird, wobei bei Überschreitung eines Schwellwertes für die Überholzeitspanne der Überholvorgang durch Reduzierung der Geschwindigkeit des eigenen Kraftfahrzeugs (1) abgebrochen wird.

9. Verfahren nach einem der Ansprüche 1 bis 7,
   **dadurch gekennzeichnet,**
   **dass** bei aufgrund einer Sensorfusion kontinuierlich nachverfolgbarem detektierten Verkehrsteilnehmer (5) eine Überholzeitspanne, insbesondere betreffend die Überholstrecke, gemessen wird, wobei bei Überschreitung eines Schwellwertes für die Überholzeitspanne der Überholvorgang durch Reduzierung der Geschwindigkeit des eigenen Kraftfahrzeugs (1) abgebrochen wird.

10. Kraftfahrzeug (1), aufweisend ein wenigstens zur automatischen Längsführung des Kraftfahrzeugs (1) ausgebildetes Fahrerassistenzsystem (7) mit einem zur Durchführung eines Verfahrens nach einem der vorangehenden Ansprüche ausgebildeten Steuergerät (8).

**Claims**

1. Method for operating at least one driver assistance system (7) of a motor vehicle (1), configured for automatic longitudinal guidance of a motor vehicle (1), in particular an ACC system, wherein the motor vehicle (1) further has a front sensor system (9) comprising in particular at least one radar sensor and/or at least one laser scanner for detecting a preceding road user (5), at least partially also in adjacent lanes (4, 13), the sensor data of which is provided to the driver assistance system (7),

**characterised in that**,
during active automatic longitudinal guidance and on detecting a slower preceding road user (5) driving in a lane (4,13) adjacent to the current lane (2) of the motor vehicle (1), by evaluating the sensor data an overtaking time duration is calculated taking into account at least the current speed difference between the maximum permissible speed of said motor vehicle (1) in the context of the longitudinal control without taking into account the detected road user (5) and the measured speed of the detected road user (5), wherein when a maximum permissible overtaking time is exceeded, a longitudinal adjustment is made to a preset separation to the detected road user (5) through the overtaking time duration as a safety condition.

2. Method according to claim 1,
**characterised in that**
the maximum permissible overtaking time is selected in the range from 5 seconds to 15 seconds.

3. Method according to claim 1,
**characterised in that**
in order to determine the overtaking time duration, an overtaking distance is determined and divided by the speed difference.

4. Method according to claim 3,
**characterised in that**
the overtaking distance is determined including at least a front and a rear safety distance of the detected road user (5) and/or the sum of the lengths of said motor vehicle (1) and the detected road user (5).

5. Method according to any of the preceding claims,
**characterised in that**
in particular at least outside of a use of the overtaking distance during an overtaking procedure, the overtaking time duration is updated on the basis of the current sensor data, wherein if the safety condition is not met during a longitudinal control on the detected road user (5) this is aborted and an overtaking procedure is initiated or if the safety condition is met during an overtaking procedure, the overtaking procedure is aborted and the separation to the detected road user (5) is longitudinally controlled.

6. Method according to any of the preceding claims,
**characterised in that**
when, after having disappeared from the detection region (11) of the front sensor system (9) due to an overtaking procedure, a detected road user (5) appears again, the overtaking procedure is assessed as aborted.

7. Method according to any of the preceding claims,
**characterised in that**
the motor vehicle (1) also has a rear sensor system (10), wherein when the detected road user (5) appears in the detection region (12) of the rear sensor system (10), the overtaking procedure is assessed as complete.

8. Method according to claim 6 and 7,
**characterised in that**
an overtaking time period is measured, in which the detected road user (5) appears neither in the detection region (11) of the front sensor system (9) nor in the detection region (12) of the rear sensor system (10), wherein if a threshold value for the overtaking time period is exceeded, the overtaking procedure is supported by reducing the speed of said motor vehicle (1).

9. The method according to one of claims 1 to 7,
**characterised in that**
when a detected road user (5) can be continuously tracked due to a sensor combination, an overtaking time period, in particular regarding the overtaking distance, is measured, wherein when a threshold value for the overtaking time period is exceeded, the overtaking procedure is aborted by reducing the speed of said motor vehicle (1).

10. Motor vehicle (1), comprising a driver assistance system (7) configured at least for automatic longitudinal guidance of the motor vehicle (1) comprising a control device (8) configured to carry out a method according to one of the preceding claims.

**Revendications**

1. Procédé pour faire fonctionner un système d'assistance au conducteur (7) d'un véhicule automobile (1), en particulier un système ACC, qui est conçu au moins pour le guidage longitudinal automatique d'un véhicule automobile (1), le véhicule automobile (1) présentant en outre des capteurs avant (9) qui détectent un usager de la route (5) circulant devant, au moins partiellement aussi dans des voies adjacentes (4, 13), comprenant en particulier au moins un capteur radar et/ou au moins un scanner laser, dont les données de capteur sont mises à la disposition du système d'assistance au conducteur (7),
**caractérisé en ce que**
avec le guidage longitudinal automatique actif et avec la détection d'un usager de la route plus lent circulant devant (5) dans une voie (4, 13) adjacente à la voie actuelle (2) du véhicule automobile (1), en évaluant les données de capteur, un temps de dépassement est précalculé en tenant compte au moins de la différence de vitesse actuelle entre la vitesse maximale autorisée du véhicule automobile (1) de l'invention dans le cadre du contrôle longitudinal sans tenir compte de l'usager de la route détecté (5) et la vitesse mesurée de l'usager de la route détecté (5), dans lequel, lorsqu'un temps de dépassement maximal autorisé est dépassé par la durée de dépassement, le contrôle longitudinal est effectué comme condition de sécurité à une distance prédéfinie de l'usager de la route détecté (5).

2. Procédé selon la revendication 1,
**caractérisé en ce que**
le temps de dépassement maximal autorisé est choisi dans une plage de 5 à 15 secondes.

3. Procédé selon la revendication 1,
**caractérisé en ce que**
pour déterminer le temps de dépassement, une distance de dépassement est déterminée et divisée par la différence de vitesse.

4. Procédé selon la revendication 3,
**caractérisé en ce que**
la distance de dépassement est déterminée en comprenant au moins une distance de sécurité avant et arrière de l'usager de la route détecté (5) et/ou la somme des longueurs du véhicule automobile du conducteur (1) et de l'usager de la route détecté (5).

5. Procédé selon l'une quelconque des revendications précédentes,
**caractérisé en ce que**
en particulier au moins en dehors d'une utilisation de la distance de dépassement lors d'une manœuvre de dépassement, le temps de dépassement est actualisé sur la base des données de capteur actuelles, dans lequel, si la condition de sécurité n'est pas remplie lors d'un contrôle longitudinal par rapport à l'usager de la route détecté (5), ledit contrôle longitudinal est interrompu et une manœuvre de dépassement est déclenchée, ou si la condition de sécurité est remplie lors d'une manœuvre de dépassement, la manœuvre de dépassement est interrompue et est contrôlée longitudinalement par rapport à la distance prédéfinie par rapport à l'usager de la route détecté (5).

6. Procédé selon l'une quelconque des revendications précédentes,
**caractérisé en ce que**
si un usager de la route détecté (5) réapparaît dans la zone de détection (11) des capteurs avant (9) après avoir disparu de ladite zone de détection en raison d'une manœuvre de dépassement, la manœuvre de dépassement est évaluée comme ayant été interrompue.

7. Procédé selon l'une quelconque des revendications précédentes,
**caractérisé en ce que**

le véhicule automobile (1) présente également des capteurs arrière (10), la manœuvre de dépassement étant évaluée comme ayant pris fin lorsque l'usager de la route (5) détecté apparaît dans la zone de détection (12) des capteurs arrière (10).

8. Procédé selon la revendication 6 et 7,
**caractérisé en ce que**
un temps de dépassement pendant lequel l'usager de la route (5) détecté n'apparaît ni dans la zone de détection (11) des capteurs avant (9) ni dans la zone de détection (12) des capteurs arrière (10) est mesuré, la manœuvre de dépassement étant interrompue par une réduction de la vitesse du véhicule automobile du conducteur (1) si une valeur seuil du temps de dépassement est dépassée.

9. Procédé selon l'une quelconque des revendications 1 à 7,
**caractérisé en ce que**
un temps de dépassement, en particulier concernant la distance de dépassement, est mesuré pour les usagers de la route détectés (5) qui peuvent être suivis en permanence sur la base de capteurs multiples, la manœuvre de dépassement étant interrompue par une réduction de la vitesse du véhicule automobile du conducteur (1) si une valeur seuil pour le temps de dépassement est dépassée.

10. Véhicule automobile (1) présentant un système d'assistance au conducteur (7) qui est conçu au moins pour le guidage longitudinal automatique du véhicule automobile (1) et qui comporte un dispositif de commande (8) qui est conçu pour exécuter un procédé selon l'une quelconque des revendications précédentes.

# FIG. 1

# FIG. 2

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004029369 B4
- DE 102008012644 A1
- DE 102013214308 A1